# EUROPEAN PATENT APPLICATION

(11) **EP 4 785 844 A1**
(43) Date of publication of application: **05.08.2026**
(21) Application number: 24870087.4
(22) Date of filing: 01.08.2024
(51) Int. Cl.: A47L 11/40

(54) **AUTOMATIC CLEANING METHOD AND APPARATUS, AND CLEANING DEVICE AND COMPUTER-READABLE STORAGE MEDIUM**

(30) Priority: 28.09.2023 CN 202311279765
(71) Applicant: Beijing Roborock Innovation Technology Co., Ltd., Beijing 102206 (CN)
(72) Inventor: SONG, Jian, Beijing 102206 (CN); WANG, Lei, Beijing 102206 (CN)
(74) Representative: Maiwald GmbH
(86) International application number: PCT/CN2024/109166
(87) International publication number: WO 2025/066535

(57) **Abstract**

Provided in the present application are an automatic cleaning method and apparatus, and a cleaning device and a computer-readable storage medium. The method comprises: acquiring SLAM change information of a target cleaning area in a current cleaning process; on the basis of the SLAM change information of the target cleaning area, determining whether there is a target point meeting a first cleaning condition in the target cleaning area, wherein the first cleaning condition is used for reflecting features of a point, which is not cleaned due to the blocking of an obstacle and is no longer blocked by the obstacle after the position of the obstacle changes; and if there is a target point in the target cleaning area, executing cleaning processing on the basis of the target point. The technical solution of the present application improves the environmental adaptability of a cleaning device and prevents cleanable areas from being missed, such that a cleaning effect is effectively improved and the practicability of the cleaning device is increased.

## Description

The present disclosure claims priority to Chinese Patent Application No. 202311279765.9, filed with the China National Intellectual Property Administration on September 28, 2023 and entitled "AUTOMATIC CLEANING METHOD AND APPARATUS, CLEANING DEVICE, AND COMPUTER-READABLE STORAGE MEDIUM", which is incorporated herein by reference in its entirety.

### TECHNICAL FIELD

The present disclosure relates to the technical field of smart appliances, and in particular, to an automatic cleaning method and apparatus, a cleaning device, and a computer-readable storage medium.

### BACKGROUND ART

When a cleaning device, such as a sweeper, a mopping machine, or a floor-cleaning machine, performs automatic cleaning, the cleaning region of the cleaning device is limited by the position of an obstacle. In a general cleaning process, the cleaning device usually first scans along the obstacle to determine a cleanable region, and then cleans the cleanable region. The obstacle herein includes, but is not limited to, any obstacle that affects the movement of the cleaning device, such as a wall or a door.

However, if the door of the room is in a closed state when the cleaning device scans a cleanable region, the cleaning device may determine that the door is an obstacle and the region behind the door is not a cleanable region. In other words, when scanning the cleanable region, the cleaning device may identify the door as an impassable obstacle. If the door is opened after the cleanable region is scanned, the door is switched from a closed state to an open state. In this case, since the region inside the door is not considered as the cleanable region by the cleaning device, the cleaning device does not clean the newly added region that is reachable inside the door during the cleaning process. Consequently, the cleaning region is missed, thereby affecting the cleaning effect.

Therefore, how to reduce the impact of the switching of the open or closed state of the door on the automatic cleaning effect of the cleaning device has become an urgent technical problem to be solved at present.

### SUMMARY OF THE INVENTION

Embodiments of the present disclosure provide an automatic cleaning method and apparatus, a cleaning device, and a computer-readable storage medium, which are intended to solve the technical problem in the related art that the automatic cleaning effect of a cleaning device is affected by the switching of the open or closed state of a door.

In a first aspect, the embodiments of the present disclosure provide an automatic cleaning method, which includes: acquiring SLAM change information of a target cleaning region in a current cleaning process; determining, based on the SLAM change information of the target cleaning region, whether the target cleaning region is provided with target points that meet a first cleaning condition, where the first cleaning condition is used to reflect a feature of points that are not cleaned due to being blocked by an obstacle but are no longer blocked by the obstacle after a position of the obstacle changes; and performing cleaning based on the target points if the target cleaning region is provided with the target points.

In one embodiment of the present disclosure, optionally, performing the cleaning based on the target points includes: determining a cleanable region based on the target points; and cleaning the cleanable region.

In one embodiment of the present disclosure, optionally, determining the cleanable region based on the target points includes: clustering the target points to obtain a plurality of sets of clustered points; and for each set of clustered points, if the set of clustered points meets a second cleaning condition, determining a region in which the set of clustered points is located to be the cleanable region, where the second cleaning condition is used to reflect a feature of the region in which the set of clustered points is located when the region can be effectively cleaned by a cleaning device.

In one embodiment of the present disclosure, optionally, acquiring the SLAM change information of the target cleaning region includes: acquiring the SLAM change information of the target cleaning region upon completion of cleaning on a current zone in the target cleaning region; or acquiring the SLAM change information of the target cleaning region upon completion of all cleaning in the target cleaning region.

In one embodiment of the present disclosure, optionally, acquiring the SLAM change information of the target cleaning region includes: acquiring the SLAM change information of the target cleaning region upon completion of cleaning on a current zone in the target cleaning region if a ratio of a cleaned area in the current cleaning process to the target cleaning region is greater than or equal to a specified percentage, and/or if a consumed cleaning duration of the current cleaning process is greater than or equal to a specified duration.

In one embodiment of the present disclosure, optionally, acquiring the SLAM change information of the target cleaning region includes: acquiring current SLAM information of the target cleaning region at a current moment and historical SLAM information of the target cleaning region at a historical moment, where the current moment is a cleaning completion moment of the current zone in the target cleaning region, or a cleaning completion moment of the target cleaning region, and the historical moment is a cleaning start moment of the current zone, a cleaning start moment of the target cleaning region, or a cleaning start moment of any non-initial zone in the target cleaning region other than the current zone; and determining the SLAM change information based on the historical SLAM information and the current SLAM information.

In one embodiment of the present disclosure, optionally, determining, based on the SLAM change information of the target cleaning region, whether the target cleaning region is provided with the target points that meet the first cleaning condition includes: determining, based on the SLAM change information of the target cleaning region, points with a specified cleaning feature as the target points in the target cleaning region, where the specified cleaning feature includes one or more of the following: a point type of a point being changed from an obstacle type to a space type; points adjacent to the point including at least one cleaned point and at least one uncleaned point; the point being spaced apart from the obstacle by at least one other point; the point being outside a preset no-go region, and the preset no-go region including a carpet region, a pile region, and a self-defined safety region; and the point being outside a cleaned region in the current cleaning process, and a distance from the point to an edge point of the cleaned region being greater than or equal to a first specified distance.

In one embodiment of the present disclosure, optionally, if the set of clustered points meets the second cleaning condition, determining the region in which the set of clustered points is located to be the cleanable region includes: determining the region in which the set of clustered points is located to be the cleanable region if a width of the region in which the set of clustered points is located in at least one direction is greater than a maximum machine body width of the cleaning device, an area of the region in which the set of clustered points is located is greater than or equal to a first specified area, and the region in which the set of clustered points is located includes at least a specified number of points at distances from the obstacle that are greater than or equal to a second specified distance.

In one embodiment of the present disclosure, optionally, cleaning the cleanable region includes: performing a cross-region action on the cleanable region; cleaning the cleanable region upon successful performing of the cross-region action; returning to a step of acquiring the SLAM change information of the target cleaning region upon unsuccessful performing of the cross-region action, so as to re-determine whether the target cleaning region is provided with the cleanable region; and in the case that it is re-determined that the target cleaning region is provided with the cleanable region, within a specified distance range centered at a current position of the cleaning device, cleaning the cleanable region if an area of an uncleaned region is greater than or equal to a second specified area; and cancelling the cleaning of the cleanable region if the area of the uncleaned region is less than the second specified area.

In a second aspect, the embodiments of the present disclosure provide an automatic cleaning apparatus, which includes: an SLAM change information acquisition unit, configured to acquire SLAM change information of a target cleaning region in a current cleaning process; a first cleaning condition verification unit, configured to determine, based on the SLAM change information of the target cleaning region, whether the target cleaning region is provided with target points that meet a first cleaning condition, where the first cleaning condition is used to reflect a feature of points that are not cleaned due to being blocked by an obstacle but are no longer blocked by the obstacle after a position of the obstacle changes; and a cleaning execution unit, configured to perform cleaning based on the target points if the target cleaning region is provided with the target points.

In one embodiment of the present disclosure, optionally, the cleaning execution unit is configured to: determine a cleanable region based on the target points; and clean the cleanable region.

In one embodiment of the present disclosure, optionally, the cleaning execution unit includes: a second cleaning condition verification unit, configured to cluster the target points to obtain a plurality of sets of clustered points; and for each set of clustered points, if the set of clustered points meets a second cleaning condition, determine a region in which the set of clustered points is located to be the cleanable region, where the second cleaning condition is used to reflect a feature of the region in which the set of clustered points is located when the region can be effectively cleaned by a cleaning device.

In one embodiment of the present disclosure, optionally, the SLAM change information acquisition unit is configured to: acquire the SLAM change information of the target cleaning region upon completion of cleaning on a current zone in the target cleaning region; or acquire the SLAM change information of the target cleaning region upon completion of all cleaning in the target cleaning region.

In one embodiment of the present disclosure, optionally, the SLAM change information acquisition unit is configured to: acquire the SLAM change information of the target cleaning region upon completion of cleaning on a current zone in the target cleaning region if a ratio of a cleaned area in the current cleaning process to the target cleaning region is greater than or equal to a specified percentage, and/or if a consumed cleaning duration of the current cleaning process is greater than or equal to a specified duration.

In one embodiment of the present disclosure, optionally, the SLAM change information acquisition unit is configured to: acquire current SLAM information of the target cleaning region at a current moment and historical SLAM information of the target cleaning region at a historical moment, where the current moment is a cleaning completion moment of the current zone in the target cleaning region, or a cleaning completion moment of the target cleaning region, and the historical moment is a cleaning start moment of the current zone, a cleaning start moment of the target cleaning region, or a cleaning start moment of any non-initial zone in the target cleaning region other than the current zone; and determine the SLAM change information based on the historical SLAM information and the current SLAM information.

In one embodiment of the present disclosure, optionally, the first cleaning condition verification unit is configured to: determine, based on the SLAM change information of the target cleaning region, points with a specified cleaning feature as the target points in the target cleaning region, where the specified cleaning feature includes one or more of the following: a point type of a point being changed from an obstacle type to a space type; points adjacent to the point including at least one cleaned point and at least one uncleaned point; the point being spaced apart from the obstacle by at least one other point; the point being outside a preset no-go region, and the preset no-go region including a carpet region, a pile region, and a self-defined safety region; and the point being outside a cleaned region in the current cleaning process, and a distance from the point to an edge point of the cleaned region being greater than or equal to a first specified distance.

In one embodiment of the present disclosure, optionally, the second cleaning condition verification unit is configured to: determine the region in which the set of clustered points is located to be the cleanable region if a width of the region in which the set of clustered points is located in at least one direction is greater than a maximum machine body width of the cleaning device, an area of the region in which the set of clustered points is located is greater than or equal to a first specified area, and the region in which the set of clustered points is located includes at least a specified number of points at distances from the obstacle that are greater than or equal to a second specified distance.

In one embodiment of the present disclosure, optionally, the cleaning execution unit is configured to: perform a cross-region action on the cleanable region; clean the cleanable region upon successful performing of the cross-region action; return to a step of acquiring the SLAM change information of the target cleaning region upon unsuccessful performing of the cross-region action, so as to re-determine whether the target cleaning region is provided with the cleanable region; and in the case that it is re-determined that the target cleaning region is provided with the cleanable region, within a specified distance range centered at a current position of the cleaning device, clean the cleanable region if an area of an uncleaned region is greater than or equal to a second specified area; and cancel the cleaning of the cleanable region if the area of the uncleaned region is less than the second specified area.

In a third aspect, the embodiments of the present disclosure provide a cleaning device, which includes: at least one processor; and a memory communicatively connected to the at least one processor, where the memory stores instructions executable by the at least one processor, and the instructions are configured for performing the method according to the first aspect.

In a fourth aspect, the embodiments of the present disclosure provide a computer-readable storage medium storing computer-executable instructions. The computer-executable instructions are used for performing the method according to the first aspect.

According to the above technical solutions, in view of the technical problem in the related art that the automatic cleaning effect of the cleaning device is affected by the switching of the open or closed state of the door, by acquiring the SLAM change information of the target cleaning region, the cleaning device is triggered to clean newly added cleanable regions generated and/or exposed due to the movement of the obstacle after the cleaning device is scanned to obtain the SLAM information. Thus, the cleaning device can be prevented from missing these newly added cleanable regions, such that the cleaning area of the cleaning device is expanded, and the environmental adaptability of the cleaning device is improved, thereby effectively improving the cleaning effect and improving the practicability of the cleaning device.

### BRIEF DESCRIPTION OF THE DRAWINGS

For clearer descriptions of the technical solutions in embodiments of the present disclosure, the drawings required to be used in the embodiments are briefly introduced below. It is apparent that the drawings in the description below are only some embodiments of the present disclosure, and for those of ordinary skill in the art, other drawings may be obtained from the drawings without creative efforts.
FIG. 1 shows a flowchart of an automatic cleaning method according to one embodiment of the present disclosure;
FIG. 2 shows a flowchart of an automatic cleaning method according to another embodiment of the present disclosure;
FIG. 3 shows a flowchart of an automatic cleaning method according to yet another embodiment of the present disclosure;
FIG. 4 shows a block diagram of an automatic cleaning apparatus according to one embodiment of the present disclosure;
FIG. 5 shows a block diagram of a cleaning device according to one embodiment of the present disclosure; and
FIG. 6 shows a block diagram of a cleaning device according to one embodiment of the present disclosure.

### DETAILED DESCRIPTION

The technical solutions in embodiments of the present present disclosure are clearly and completely described hereinafter with reference to the drawings in the embodiments of the present present disclosure. It is apparent that the described embodiments are some, but not all, embodiments of the present present disclosure. Based on the embodiments of the present present disclosure, all other embodiments obtained by those of ordinary skill in the art without creative efforts shall fall within the protection scope of the present present disclosure.

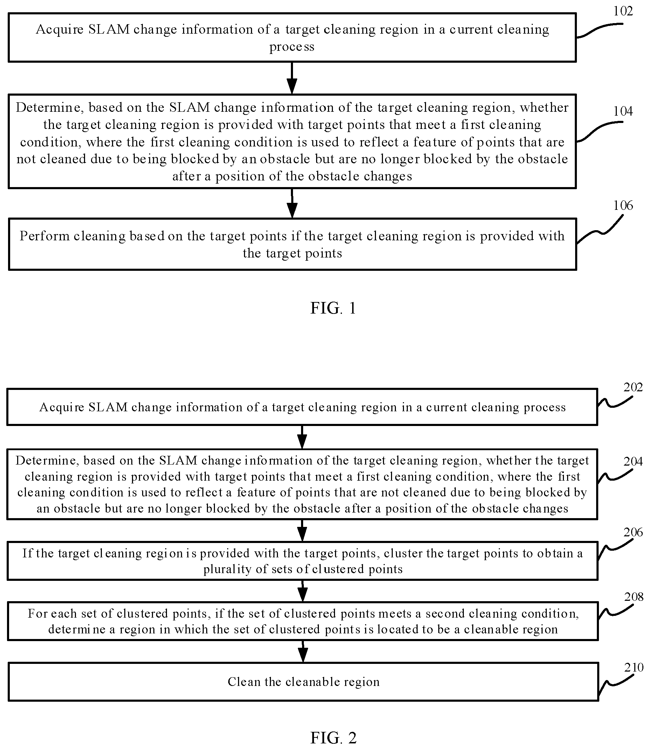

FIG. 1 shows a flowchart of an automatic cleaning method according to one embodiment of the present disclosure.

As shown in FIG. 1, the automatic cleaning method according to one embodiment of the present disclosure includes:
In step 102, SLAM change information of a target cleaning region is acquired in a current cleaning process.

The current cleaning process refers to a cleaning process initiated by a cleaning device in response to a current cleaning instruction. The cleaning process starts when the automatic cleaning device acquires the current cleaning instruction, and ends when the automatic cleaning device completes a cleaning task indicated by the current cleaning instruction or receives a cleaning stop instruction.

Optionally, the current cleaning process includes one or more of the following: supplementary performing of historically uncompleted cleaning tasks, real-time performing of at least one new cleaning task, and scheduled performing of at least one new cleaning task.

The target cleaning region includes all or part of the region required to be cleaned in the current cleaning process.

Optionally, the target cleaning region includes a current zone in which the cleaning device completes real-time cleaning in the current cleaning process.

Optionally, the target cleaning region includes all of the region required to be cleaned by the cleaning device in the current cleaning process.

Optionally, the target cleaning region includes the current zone, as well as all historical zones, at least one random historical zone, or at least one specified historical zone that is cleaned before the current zone in the current cleaning process.

An SLAM (simultaneous localization and mapping, simultaneous localization and mapping) technology is used to enable the cleaning device to gradually build a map of an environment in which the cleaning device is located, thereby allowing the cleaning device to travel while avoiding obstacles accordingly. Based on this, it can be understood that the SLAM information of any point in the target cleaning region is used to reflect whether the point is located on an obstacle or in space. In this case, the SLAM change information of the target cleaning region can show which points in the target cleaning region have had their locations switched between the possibilities of obstacle and space.

In other words, the SLAM change information of the target cleaning region in the current cleaning process may reflect the changes in the obstacle and space in the target cleaning region, and the changes may be caused by the movement of the obstacle. Further, the movement of the obstacle may cause an original position in which the obstacle is located to become space, for example, in the case that a foldable sofa is folded away, an end table is moved, a door is opened, or a door is closed. In particular, for the change of a door being opened, not only does an original position in which the door as an obstacle is located become space, but the movement of the door itself may also turn a region behind the door that was previously unreachable by the cleaning device into space reachable by the cleaning device.

Certainly, in some scenarios, even if the obstacle moves, when an original position in which the obstacle is located is too narrow for the cleaning device to pass through, an increase in unobstructed space does not necessarily mean that the space reachable by the cleaning device is increased.

In summary, the SLAM change information of the target cleaning region in the current cleaning process may reflect the increase in the unobstructed space in the current environment, indicating that there is a possibility of increasing the space reachable by the cleaning device. Therefore, the acquisition of the SLAM change information of the target cleaning region may be used to trigger a further determining step, so as to determine whether the unobstructed space is a space reachable by the cleaning device.

In step 104, whether the target cleaning region is provided with target points that meet a first cleaning condition is determined based on the SLAM change information of the target cleaning region.

In step 106, if the target cleaning region is provided with the target points, cleaning is performed based on the target points.

The first cleaning condition is used to reflect a feature of points that are not cleaned due to being blocked by an obstacle but are no longer blocked by the obstacle after a position of the obstacle changes. In other words, if a point in the target cleaning region is first blocked by an obstacle and is not cleaned, and then is no longer blocked by the obstacle due to a position change of the obstacle, the point is switched from the obstacle to the space, i.e., the unobstructed space. This indicates that the space in which the point is located has a possibility of being reachable by the cleaning device. Therefore, the cleaning may be performed based on the target points, so as to prevent the cleaning device from missing the space increased due to the position change of the obstacle during cleaning.

According to the above technical solutions, by acquiring the SLAM change information of the target cleaning region, the cleaning device is triggered to clean newly added cleanable regions generated and/or exposed due to the movement of the obstacle after the cleaning device is scanned to obtain the SLAM information. Thus, the cleaning device can be prevented from missing these newly added cleanable regions, such that the cleaning area of the cleaning device is expanded, and the environmental adaptability of the cleaning device is improved, thereby effectively improving the cleaning effect and improving the practicability of the cleaning device.

In a possible design, a cleanable region may be determined based on the target points, and the cleanable region is then cleaned.

Optionally, a region in which the target points are located may be directly set as a cleanable region, such that the cleaning device travels to the cleanable region, so as to clean the region in which the target points are located. Certainly, if the cleaning device cannot complete the cleaning on all or part of the region in which the target points are located due to the fact that the maximum width of the region is less than the machine body width of the cleaning device, the cleaning device skips cleaning the region in which the target points are located and continues to perform the current cleaning process.

Optionally, a region having a specified radius with the target point as an original center may be determined to be the region in which the target point is located.

Certainly, there are a plurality of target points, and it is determined that each target point is provided with a region in which the target point is located. The union of the regions in which all target points are located is the region required to be cleaned by the cleaning device.

In another possible design, since the space in which the target points are located only has a possibility of being reachable by the cleaning device, it is necessary to further determine the region certainly reachable by the cleaning device based on the target points, so as to define the cleanable region of the cleaning device and improve the intelligent cleaning level of the cleaning device. A specific manner of determining the region certainly reachable by the cleaning device based on the target points is described below with reference to FIG. 2.

FIG. 2 shows a flowchart of an automatic cleaning method according to another embodiment of the present disclosure.

As shown in FIG. 2, the automatic cleaning method according to another embodiment of the present disclosure includes:
In step 202, SLAM change information of a target cleaning region is acquired in a current cleaning process.

In step 204, whether the target cleaning region is provided with target points that meet a first cleaning condition is determined based on the SLAM change information of the target cleaning region. The first cleaning condition is used to reflect a feature of points that are not cleaned due to being blocked by an obstacle but are no longer blocked by the obstacle after a position of the obstacle changes.

In step 206, if the target cleaning region is provided with the target points, the target points are clustered to obtain a plurality of sets of clustered points.

If the target cleaning region is provided with the target points, it indicates that the current environment has a possibility of newly adding the region reachable by the cleaning device. Therefore, it is necessary to clearly determine whether the region reachable by the cleaning device is actually newly added to the current environment.

Since the target points are points switched from the obstacle to the unobstructed space, the region in which the sets of clustered points composed of the plurality of target points are located is the region switched from the obstacle to the unobstructed space.

Optionally, a manner of clustering the target points includes, but is not limited to, any computational manner capable of clustering the points, such as a k-means clustering algorithm, a k-means++ clustering algorithm, a bi-kmeans clustering algorithm, a kernel k-means clustering algorithm, a DBSCAN clustering algorithm, and an OPTICS clustering algorithm.

In step 208, for each set of clustered points, if the set of clustered points meets a second cleaning condition, a region in which the set of clustered points is located is determined to be a cleanable region.

The second cleaning condition is used to reflect a feature of the region in which the set of clustered points is located when the region can be effectively cleaned by the cleaning device. In other words, since the region in which the sets of clustered points composed of the plurality of target points are located is the region switched from the obstacle to the unobstructed space, if the region in which the sets of clustered points are located is provided with the feature when the region can be effectively cleaned by the cleaning device, it indicates that the region in which the sets of clustered points are located is a newly added region reachable by the cleaning device in the current environment, i.e., the cleanable region.

In step 210, the cleanable region is cleaned.

At this point, whether a region reachable by the cleaning device is newly added to the current environment may be automatically identified, and upon automatically identifying the newly added region reachable by the cleaning device, the cleaning device is enabled to actively clean the region. In this way, the cleaning device can be prevented from missing the newly added cleanable region, such that the cleaning area of the cleaning device in a single cleaning process is expanded, and the environmental adaptability of the cleaning device is improved, thereby effectively improving the cleaning effect and improving the practicability of the cleaning device.

Certainly, a manner of determining the region reachable by the cleaning device based on the target points is not limited to the above manner.

In another possible design, a region having a specified radius with the target point as the original center may be first designated, and it is then verified whether the region having the specified radius with the target point as the original center meets the second cleaning condition.

In yet another possible design, all the target points may be further connected in pairs to verify whether the region enclosed by connecting lines meets the second cleaning condition.

In still another possible design, all the target points may be further connected in pairs to acquire the region enclosed by connecting lines. Then, based on the region enclosed by the connection lines, an outward expansion is performed on the region in all directions of each edge by a specified outward expansion distance, and it is determined whether the outward expanded region meets the second cleaning condition.

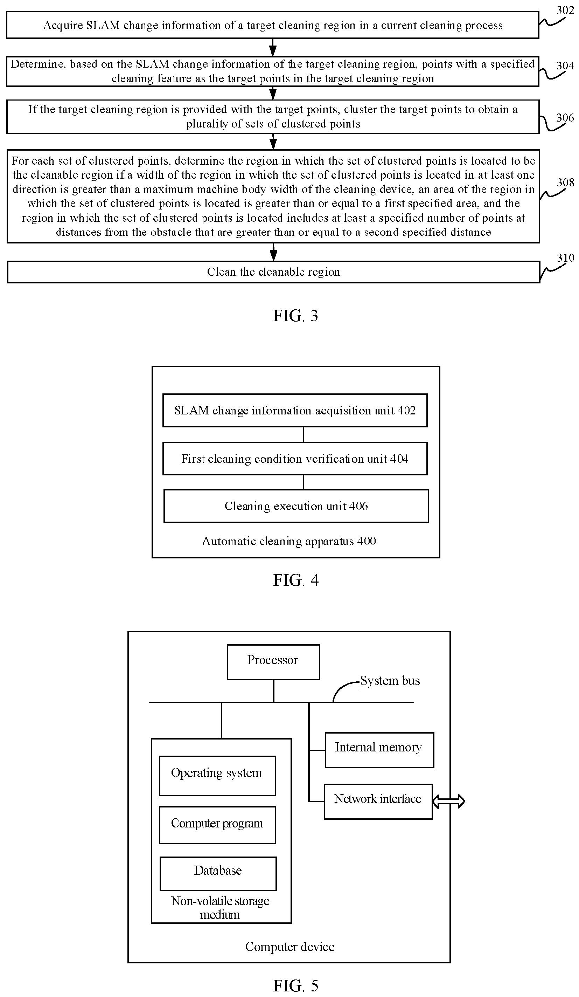

Possible implementations of the first cleaning condition and the second cleaning condition are described hereinafter with reference to FIG. 3.

FIG. 3 shows a flowchart of an automatic cleaning method according to yet another embodiment of the present disclosure.

As shown in FIG. 3, the automatic cleaning method according to yet another embodiment of the present disclosure includes:
In step 302, SLAM change information of a target cleaning region is acquired in a current cleaning process.

In step 304, based on the SLAM change information of the target cleaning region, points with a specified cleaning feature are determined as the target points in the target cleaning region.

Based on the embodiments shown in FIGs. 1 and 2, it can be seen that the first cleaning condition is used to reflect a feature of points that are not cleaned due to being blocked by an obstacle but are no longer blocked by the obstacle after a position of the obstacle changes. In other words, a point being provided with the feature in the target cleaning region is the target point. Here, the feature refers to a specified cleaning feature.

In a possible design, the specified cleaning feature includes one or more of the following: a point type of a point being changed from an obstacle type to a space type; points adjacent to the point including at least one cleaned point and at least one uncleaned point; the point being spaced apart from the obstacle by at least one other point; the point being outside a preset no-go region, and the preset no-go region including a carpet region, a pile region, and a self-defined safety region; and the point being outside a cleaned region in the current cleaning process, and a distance from the point to an edge point of the cleaned region being greater than or equal to a first specified distance.

Optionally, for a point in the SLAM change information, if the point type of the point is changed from the obstacle type to the space type, it indicates that the location of the point is switched from an obstacle to an unobstructed space and is potentially passable by the cleaning device. Therefore, such a point is selected as the target point, so as to further determine whether the location of the point can be effectively cleaned by the cleaning device.

Optionally, for a point in the SLAM change information, if the point type of the point is changed from the obstacle type to the space type, and points adjacent to the point include at least one cleaned point and at least one uncleaned point, it indicates that the location of the point is switched from an obstacle to an unobstructed space, and the point is located at a boundary between the obstacle and the unobstructed space. If the cleaning device starts cleaning from the point, it is possible for the cleaning device to travel to the unobstructed space. Therefore, such a point is selected as the target point, so as to further determine whether the location of the point can be effectively cleaned by the cleaning device.

Optionally, for a point in the SLAM change information, if the point type of the point is changed from the obstacle type to the space type, and the point is spaced apart from the obstacle by at least one other point, it indicates that the point is not only located in an unobstructed space, but also has no adjacent obstacles around it, such that the point is potentially passable by the cleaning device. Therefore, such a point is selected as the target point, so as to further determine whether the location of the point can be effectively cleaned by the cleaning device.

Optionally, for a point in the SLAM change information, if the point type of the point is changed from the obstacle type to the space type, it indicates that the location of the point is switched from an obstacle to an unobstructed space. In addition, if the point is outside the preset no-go region, such as a carpet region, a pile region, or a self-defined safety region, it indicates that the location of the point is not a position that the cleaning device is not allowed to reach and is potentially passable by the cleaning device. Therefore, such a point is selected as the target point, so as to further determine whether the location of the point can be effectively cleaned by the cleaning device. The preset no-go region includes, but is not limited to, the carpet region, the pile region, and the self-defined safety region, and may also be any preset position that the cleaning device is not allowed to reach.

Optionally, for a point in the SLAM change information, if the point type of the point is changed from the obstacle type to the space type, it indicates that the location of the point is switched from an obstacle to an unobstructed space. In addition, if the point is outside the cleaned region in the current cleaning process, and the distance from the point to the edge point of the cleaned region is greater than or equal to the first specified distance, it indicates that the point has not been cleaned, and the location of the point is far enough away from the cleaned region. When there is a need for cleaning, cleaning the location of the point does not result in repeated cleaning of the cleaned region. The first specified distance is the shortest distance between the cleaning point and the cleaned region when the location of the point does not result in repeated cleaning of the cleaned region.

Optionally, the first specified distance is 2 cm or 1 cm. It should be noted that the first specified distance may be set to any distance that meets the actual cleaning requirements, and is not limited to the foregoing examples.

The above is only an example of the specified cleaning feature. In an actual scenario, the specified cleaning feature may include any one or more of the above, and is not limited by the above examples.

In summary, the specified cleaning feature indicates a characteristic of points when the locations of the points are potentially passable by the cleaning device. By identifying the specified cleaning feature, target points that may be located in the newly added region reachable by the cleaning device in the current environment may be screened out, so as to further determine, based on the target points, whether the region reachable by the cleaning device is really newly added to the current environment and whether the region can be effectively cleaned by the cleaning device. Thus, the cleaning device can achieve higher accuracy when identifying the cleanable region, thereby preventing the cleanable region generated and/or exposed due to the change in the position of the obstacle from being missed.

In step 306, if the target cleaning region is provided with the target points, the target points are clustered to obtain a plurality of sets of clustered points.

If the target cleaning region is provided with the target points, it indicates that the current environment has a possibility of newly adding the region reachable by the cleaning device. Therefore, it is necessary to clearly determine whether the region reachable by the cleaning device is actually newly added to the current environment.

Since the target points are points switched from the obstacle to the unobstructed space, the region in which the sets of clustered points composed of the plurality of target points are located is the region switched from the obstacle to the unobstructed space.

Optionally, a manner of clustering the target points includes, but is not limited to, any computational manner capable of clustering the points, such as a k-means clustering algorithm, a k-means++ clustering algorithm, a bi-kmeans clustering algorithm, a kernel k-means clustering algorithm, a DBSCAN clustering algorithm, and an OPTICS clustering algorithm.

In step 308, for each set of clustered points, the region in which the set of clustered points is located is determined to be the cleanable region if the width of the region in which the set of clustered points is located in at least one direction is greater than the maximum machine body width of the cleaning device, the area of the region in which the set of clustered points is located is greater than or equal to a first specified area, and the region in which the set of clustered points is located includes at least a specified number of points at distances from the obstacle that are greater than or equal to a second specified distance.

Based on the embodiments shown in FIGs. 1 and 2, it can be seen that the second cleaning condition is used to reflect a feature of the region in which the set of clustered points is located when the region can be effectively cleaned by the cleaning device, and the feature includes: The width of the region in which the set of clustered points is located in at least one direction is greater than the maximum machine body width of the cleaning device, the area of the region in which the set of clustered points is located is greater than or equal to the first specified area, and the region in which the set of clustered points is located includes at least the specified number of points at the distances from the obstacle that are greater than or equal to the second specified distance.

First, if the width of the region in which the set of clustered points is located in at least one direction is greater than the maximum machine body width of the cleaning device, it indicates that the region in which the set of clustered points is located can accommodate the cleaning device to pass smoothly in the at least one direction, thereby meeting the basic conditions for being effectively cleaned.

Meanwhile, the first specified area refers to the minimum area of the region in which the set of clustered points is located that is large enough to require cleaning. If the area of the region in which the set of clustered points is located is greater than or equal to the first specified area, it indicates that the area of the region in which the set of clustered points is located is large enough to require the cleaning device to clean the region.

Optionally, the first specified area is 50 cm², 80 cm², or 100 cm². Certainly, the first specified area may be any area that meets the actual cleaning requirements, and is not limited to the foregoing examples.

Moreover, the second specified distance refers to the minimum distance between a point and an obstacle when the position in which the point is located can be effectively cleaned by the cleaning device. If the distance between a point in the set of clustered points and the obstacle is greater than or equal to the second specified distance, it indicates that the point can be effectively cleaned by the cleaning device. Meanwhile, the specified number refers to the minimum number of target points required to be included in the region in which the set of clustered points is located that is large enough to require cleaning by the cleaning device. Therefore, when the region in which the set of clustered points is located includes at least a specified number of points whose distances from the obstacle are greater than or equal to the second specified distance, it indicates that the area of the region in which the set of clustered points is located is large enough to require the cleaning device to clean the region. In addition, the region is far enough away from the obstacle, and therefore can be effectively cleaned by the cleaning device.

Optionally, the second specified distance is 5 cm or 1 cm. It should be noted that the second specified distance may be set to any distance that meets the actual cleaning requirements, and is not limited to the foregoing examples.

In general, when the region in which the set of clustered points is located simultaneously meets the above three conditions, it indicates that this region can accommodate the cleaning device to pass smoothly, making cleaning feasible. In addition, the region has a sufficiently large area and is far away from the obstacle, making cleaning necessary.

In step 310, the cleanable region is cleaned.

According to the above technical solutions, whether a region reachable by the cleaning device is newly added to the current environment is effectively and automatically identified by determining both of the cleaning conditions, and upon automatically identifying the newly added region reachable by the cleaning device, the cleaning device is enabled to actively clean the region. In this way, the cleaning device can be prevented from missing the newly added cleanable region, such that the cleaning area of the cleaning device in a single cleaning process is expanded, and the environmental adaptability of the cleaning device is improved, thereby effectively improving the cleaning effect and improving the practicability of the cleaning device.

In the technical solution according to any one of the above embodiments, cleaning the cleanable region includes: performing a cross-region action on the cleanable region; and cleaning the cleanable region upon successful performing of the cross-region action.

The cross-region action refers to a traveling operation of the cleaning device from a currently cleaned region to another uncleaned region. Upon successful performing of the cross-region action, it indicates that the cleaning device has successfully entered the cleanable region. In this case, the cleanable region can be directly cleaned.

In the technical solution according to any one of the above embodiments, cleaning the cleanable region includes: returning to a step of acquiring the SLAM change information of the target cleaning region upon unsuccessful performing of the cross-region action, so as to re-determine whether the target cleaning region is provided with the cleanable region; and in the case that it is re-determined that the target cleaning region is provided with the cleanable region, within a specified distance range centered at a current position of the cleaning device, cleaning the cleanable region if the area of an uncleaned region is greater than or equal to a second specified area; and cancelling the cleaning of the cleanable region if the area of the uncleaned region is less than the second specified area.

Upon unsuccessful performing of the cross-region action, it indicates that the area of the cleanable region may be too small to accommodate the cleaning device to pass smoothly. In this case, the cleanable region may be re-determined, and the cleanable region near the cleaning device is cleaned only when the uncleaned region near the cleaning device is large enough. The second specified area refers to the minimum area of the cleanable region when there is a need for cleaning, and is optionally 50 cm², 80 cm², or 90 cm². Certainly, the second specified area may be any area that meets the actual cleaning requirements, and is not limited to the foregoing examples.

In addition, based on the technical solution according to any one of the above embodiments, in a possible design, a specific manner of acquiring the SLAM change information of the target cleaning region includes: acquiring the SLAM change information of the target cleaning region upon completion of cleaning on the current zone in the target cleaning region. That is, each time the cleaning on a zone is completed, SLAM scanning is performed again to acquire the SLAM change information for checking which points have undergone a conversion between obstacle and space.

Thus, the newly added and/or exposed cleanable region due to the change in the position of the obstacle can be found in time, such that the cleaning device can perform one round of supplementary cleaning on the newly added and/or exposed cleanable region in time upon cleaning each zone, thereby improving the timeliness of cleaning the newly added and/or exposed cleanable region.

In another possible design, a specific manner of acquiring the SLAM change information of the target cleaning region includes: acquiring the SLAM change information of the target cleaning region upon completion of all cleaning in the target cleaning region. That is, upon completion of the cleaning of the target cleaning region, SLAM scanning is performed again to acquire the SLAM change information for checking which points have undergone a conversion between obstacle and space, so as to identify a cleanable region newly added and/or exposed due to the change in the position of the obstacle.

Thus, upon completion of the overall cleaning, unified supplementary cleaning may be performed on the newly added and/or exposed cleanable region possibly involved in the target cleaning region, thereby preventing the newly added and/or exposed cleanable region from being missed and improving the automatic cleaning capability and environmental adaptability of the cleaning device.

In yet another possible design, a specific manner of acquiring the SLAM change information of the target cleaning region includes: acquiring the SLAM change information of the target cleaning region upon completion of cleaning on a current zone in the target cleaning region if a ratio of a cleaned area in the current cleaning process to the target cleaning region is greater than or equal to a specified percentage, and/or if a consumed cleaning duration of the current cleaning process is greater than or equal to a specified duration.

If the ratio of the cleaned area in the current cleaning process to the target cleaning region is greater than or equal to the specified percentage, and/or if the consumed cleaning duration of the current cleaning process is greater than or equal to the specified duration. it indicates that the current cleaning process has proceeded through a sufficient portion thereof, with a sufficiently large cleaned region and/or a sufficiently long cleaning duration, such that there is a high possibility that a newly added and/or exposed cleanable region has appeared during the cleaning process performed. Therefore, in this case, SLAM scanning is performed again to acquire the SLAM change information for checking which points have undergone a conversion between obstacle and space, so as to identify a cleanable region newly added and/or exposed due to the change in the position of the obstacle, thereby preventing the region from being missed during cleaning.

In yet another possible design, a specific manner of acquiring the SLAM change information of the target cleaning region includes: acquiring current SLAM information of the target cleaning region at a current moment and historical SLAM information of the target cleaning region at a historical moment, where the current moment is a cleaning completion moment of the current zone in the target cleaning region, or a cleaning completion moment of the target cleaning region, and the historical moment is a cleaning start moment of the current zone, a cleaning start moment of the target cleaning region, or a cleaning start moment of any non-initial zone in the target cleaning region other than the current zone; and determining the SLAM change information based on the historical SLAM information and the current SLAM information.

That is, the SLAM change information may be determined based on the difference between SLAM information at the cleaning completion moment of the current zone and at the cleaning start moment of the current zone in the target cleaning region. Alternatively, the SLAM change information is determined based on the difference between SLAM information at the cleaning completion moment of the current zone in the target cleaning region and at the cleaning start moment of the target cleaning region. Alternatively, the SLAM change information is determined based on the difference between SLAM information at the cleaning completion moment of the current zone in the target cleaning region and at the cleaning start moment of any non-initial zone in the target cleaning region other than the current zone. Alternatively, the SLAM change information may be determined based on the difference between SLAM information at the cleaning completion moment of the target cleaning region and at the cleaning start moment of the current zone. Alternatively, the SLAM change information is determined based on the difference between SLAM information at the cleaning completion moment of the target cleaning region and at the cleaning start moment of the target cleaning region. Alternatively, the SLAM change information is determined based on the difference between SLAM information at the cleaning completion moment of the target cleaning region and at the cleaning start moment of any non-initial zone in the target cleaning region other than the current zone.

The shorter the duration of the interval between the two moments before and after the acquisition of the difference between SLAM information, the more timely it can be identified whether the region reachable by the cleaning device is newly added and/or exposed in the current environment. The longer the duration of the interval between the two moments before and after the acquisition of the difference between SLAM information, the smaller the total number of identifications for identifying whether the region reachable by the cleaning device is newly added and/or exposed in the current environment, and the smaller the calculation burden on the cleaning apparatus.

FIG. 4 shows a block diagram of an automatic cleaning apparatus according to one embodiment of the present disclosure.

As shown in FIG. 4, the automatic cleaning apparatus 400 according to one embodiment of the present disclosure includes: an SLAM change information acquisition unit 402, configured to acquire SLAM change information of a target cleaning region in a current cleaning process; a first cleaning condition verification unit 404, configured to determine, based on the SLAM change information of the target cleaning region, whether the target cleaning region is provided with target points that meet a first cleaning condition, where the first cleaning condition is used to reflect a feature of points that are not cleaned due to being blocked by an obstacle but are no longer blocked by the obstacle after a position of the obstacle changes; and a cleaning execution unit 406, configured to perform cleaning based on the target points if the target cleaning region is provided with the target points.

In one embodiment of the present disclosure, optionally, the cleaning execution unit 406 is configured to: determine a cleanable region based on the target points; and clean the cleanable region.

In one embodiment of the present disclosure, optionally, the cleaning execution unit 406 includes: a second cleaning condition verification unit, configured to cluster the target points to obtain a plurality of sets of clustered points; and for each set of clustered points, if the set of clustered points meets a second cleaning condition, determine a region in which the set of clustered points is located to be the cleanable region, where the second cleaning condition is used to reflect a feature of the region in which the set of clustered points is located when the region can be effectively cleaned by a cleaning device.

In one embodiment of the present disclosure, optionally, the SLAM change information acquisition unit 402 is configured to: acquire the SLAM change information of the target cleaning region upon completion of cleaning on a current zone in the target cleaning region; or acquire the SLAM change information of the target cleaning region upon completion of all cleaning in the target cleaning region.

In one embodiment of the present disclosure, optionally, the SLAM change information acquisition unit 402 is configured to: acquire the SLAM change information of the target cleaning region upon completion of cleaning on a current zone in the target cleaning region if a ratio of a cleaned area in the current cleaning process to the target cleaning region is greater than or equal to a specified percentage, and/or if a consumed cleaning duration of the current cleaning process is greater than or equal to a specified duration.

In one embodiment of the present disclosure, optionally, the SLAM change information acquisition unit 402 is configured to: acquire current SLAM information of the target cleaning region at a current moment and historical SLAM information of the target cleaning region at a historical moment, where the current moment is a cleaning completion moment of the current zone in the target cleaning region, or a cleaning completion moment of the target cleaning region, and the historical moment is a cleaning start moment of the current zone, a cleaning start moment of the target cleaning region, or a cleaning start moment of any non-initial zone in the target cleaning region other than the current zone; and determine the SLAM change information based on the historical SLAM information and the current SLAM information.

In one embodiment of the present disclosure, optionally, the first cleaning condition verification unit 404 is configured to: determine, based on the SLAM change information of the target cleaning region, points with a specified cleaning feature as the target points in the target cleaning region, where the specified cleaning feature includes one or more of the following: a point type of a point being changed from an obstacle type to a space type; points adjacent to the point including at least one cleaned point and at least one uncleaned point; the point being spaced apart from the obstacle by at least one other point; the point being outside a preset no-go region, and the preset no-go region including a carpet region, a pile region, and a self-defined safety region; and the point being outside a cleaned region in the current cleaning process, and a distance from the point to an edge point of the cleaned region being greater than or equal to a first specified distance.

In one embodiment of the present disclosure, optionally, the second cleaning condition verification unit is configured to: determine the region in which the set of clustered points is located to be the cleanable region if the width of the region in which the set of clustered points is located in at least one direction is greater than the maximum machine body width of the cleaning device, the area of the region in which the set of clustered points is located is greater than or equal to a first specified area, and the region in which the set of clustered points is located includes at least a specified number of points at distances from the obstacle that are greater than or equal to a second specified distance.

In one embodiment of the present disclosure, optionally, the cleaning execution unit 406 is configured to: perform a cross-region action on the cleanable region; clean the cleanable region upon successful performing of the cross-region action; return to a step of acquiring the SLAM change information of the target cleaning region upon unsuccessful performing of the cross-region action, so as to re-determine whether the target cleaning region is provided with the cleanable region; and in the case that it is re-determined that the target cleaning region is provided with the cleanable region, within a specified distance range centered at a current position of the cleaning device, clean the cleanable region if an area of an uncleaned region is greater than or equal to a second specified area; and cancel the cleaning of the cleanable region if the area of the uncleaned region is less than the second specified area.

The automatic cleaning apparatus 400 adopts the solution described in any one of the above embodiments and thus has all the technical effects described above, which will not be reiterated here.

In addition, in one embodiment, the present disclosure provides a cleaning device. The cleaning device may be a server, and an internal structure diagram thereof may be shown in FIG. 5. The cleaning device includes a processor, a memory, a network interface, and a database that are connected through a system bus. The processor of the cleaning device is configured to provide computing and control capabilities. The memory of the cleaning device includes a non-volatile and/or volatile storage medium and an internal memory. The non-volatile storage medium stores an operating system, a computer program, and a database. The internal memory provides an environment for running the operating system and the computer program in the non-volatile storage medium. The network interface of the cleaning device is configured to communicate with an external client through a network connection. The computer program, when executed by the processor, may implement the automatic cleaning method according to any one of the above embodiments.

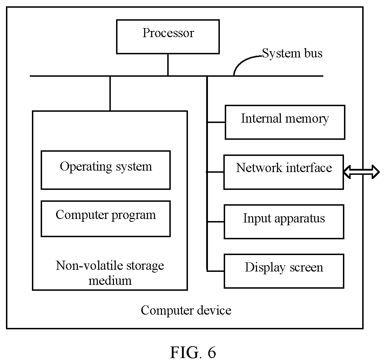

In one embodiment, the present disclosure further provides a cleaning device. The cleaning device may be a client, and an internal structure diagram thereof may be shown in FIG. 6. The cleaning device includes a processor, a memory, a network interface, a display screen, and an input apparatus that are connected through a system bus. The processor of the cleaning device is configured to provide computing and control capabilities. The memory of the cleaning device includes a non-volatile storage medium and an internal memory. The non-volatile storage medium stores an operating system and a computer program. The internal memory provides an environment for running the operating system and the computer program in the non-volatile storage medium. The network interface of the cleaning device is configured to communicate with an external server through a network connection. The computer program, when executed by the processor, may implement the automatic cleaning method according to any one of the above embodiments.

Any one of the above cleaning devices in the embodiments of the present disclosure may be any device having a cleaning function, such as a sweeper, a mopping machine, a floor-cleaning machine, a sweeping and mopping integrated machine, and a self-mobile vacuum cleaner. In addition, various forms may exist for controlling the device having the cleaning function, including but not limited to:
(1) Mobile communication devices: Such devices feature a mobile communication function and are primarily intended to provide voice and data communication services. Such terminals include: smartphones (such as iPhone), multimedia phones, feature phones, and low-end phones.
(2) Ultra-mobile personal cleaning devices: Such devices, belonging to the category of personal computers, have computing and processing functions, and generally also incorporate a mobile Internet access feature. Such terminals include: PDAs, MIDs, and UMPC devices, such as iPad.
(3) Portable entertainment devices: Such devices can display and play multimedia content. Such devices include: audio and video players (such as iPod), handheld game consoles, e-books, smart toys, wearable devices, and portable vehicle-mounted navigation devices.
(4) Servers: Devices that provide a computing service. The server is composed of a processor, a hard disk, a memory, a system bus, and the like, and the server is similar to a general-purpose computer in architecture. However, since a highly reliable service needs to be provided, high requirements are imposed on aspects such as processing capability, stability, reliability, security, scalability, and manageability.
(5) Other electronic apparatuses with data interaction functions.

In addition, the embodiments of the present disclosure provide a computer-readable storage medium storing computer-executable instructions. The computer-executable instructions are used for executing the following steps: acquiring SLAM change information of a target cleaning region in a current cleaning process; determining, based on the SLAM change information of the target cleaning region, whether the target cleaning region is provided with target points that meet a first cleaning condition, where the first cleaning condition is used to reflect a feature of points that are not cleaned due to being blocked by an obstacle but are no longer blocked by the obstacle after a position of the obstacle changes; and performing cleaning based on the target points if the target cleaning region is provided with the target points.

It should be noted that the above functions or steps that can be implemented by the computer-readable storage medium or cleaning device may correspondingly refer to the relevant descriptions in the foregoing method embodiments. To avoid repetition, the functions or steps will not be elaborated here.

The technical solutions of the present disclosure are described in detail above with reference to the drawings. According to the technical solutions of the present disclosure, by acquiring the SLAM change information of the target cleaning region, the cleaning device is triggered to clean newly added cleanable regions generated and/or exposed due to the movement of the obstacle after the cleaning device is scanned to obtain the SLAM information. Thus, the cleaning device can be prevented from missing these newly added cleanable regions, such that the cleaning area of the cleaning device is expanded, and the environmental adaptability of the cleaning device is improved, thereby effectively improving the cleaning effect and improving the practicability of the cleaning device.

It should be understood that the term "and/or" as used herein is merely a description of an association relationship between associated objects, indicating that three possible relationships may exist. For example, "A and/or B" can represent: the presence of A alone, the simultaneous presence of A and B, and the presence of B alone. In addition, the character "/" herein generally indicates an "or" relationship between the associated objects before and after.

It should be understood that although the terms "first" and "second", and the like may be used in the embodiments of the present disclosure to describe the cleaning conditions, these cleaning conditions should not be limited to these terms. These terms are only used to distinguish the cleaning conditions from each other. For example, the first cleaning condition may also be referred to as the second cleaning condition, and similarly, the second cleaning condition may also be referred to as the first cleaning condition, without departing from the scope of the embodiments of the present disclosure.

Depending on the context, the term "if" as used herein may be interpreted as "when", or "in response to determining", or "in response to detecting". Similarly, depending on the context, the phrases "if it is determined" or "if (a stated condition or event) is detected" may be interpreted as "when it is determined" or "in response to determining", or "when (a stated condition or event) is detected" or "in response to detecting (a stated condition or event)".

The terms used in the embodiments of the present disclosure are for the purpose of describing particular embodiments only and are not intended to limit the present disclosure. As used in the embodiments and the appended claims of the present disclosure, the singular forms "a", "an", and "the" are intended to include the plural forms as well, unless the context clearly indicates otherwise.

In the several embodiments according to the present disclosure, it should be understood that the disclosed system, apparatus, and method may be implemented in other manners. For example, the apparatus embodiments described above are merely illustrative. For example, the division of the units is merely a division based on logical function and may be implemented in other ways in an actual situation. For example, a plurality of units or components may be combined or integrated into another system, or some features may be ignored or not executed. In addition, the displayed or discussed coupling or direct coupling or communication connection between each other may be achieved through some interfaces, and indirect coupling or communication connection between the apparatuses or units may also be in electrical, mechanical, or other forms.

In addition, the various functional units in the embodiments of the present disclosure may be integrated into one processing unit, or the various units may physically exist separately, or two or more units may be integrated into one unit. The integrated unit may be implemented in the form of hardware, or in the form of a hardware plus software functional unit.

Those of ordinary skill in the art can understand that all or some of the procedures of the methods in the above embodiments may be completed by a computer program instructing related hardware. The computer program may be stored in a non-volatile computer-readable storage medium, and when the computer program is executed, the procedures of the above method embodiments may be included. Any reference to a memory, a storage, a database, or another medium used in the embodiments according to the present disclosure may include a non-volatile and/or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache memory. By way of illustration and not limitation, RAM is available in various forms, such as static RAM (SRAM), dynamic RAM (DRAM), synchronous DRAM (SDRAM), double data rate SDRAM (DDRSDRAM), enhanced SDRAM (ESDRAM), Synchlink (Synchlink) DRAM (SLDRAM), Rambus (Rambus) direct RAM (RDRAM), direct Rambus dynamic RAM (DRDRAM), and Rambus dynamic RAM (RDRAM).

The above embodiments are only used to illustrate the technical solutions of the present present disclosure, but not to limit them; although the present present disclosure has been described in detail with reference to the foregoing embodiments, those of ordinary skill in the art should understand that they can still modify the technical solutions recorded in the foregoing embodiments, or make equivalent substitutions for some of the technical features; and these modifications or substitutions do not make the essence of the corresponding technical solutions deviate from the spirit and scope of the technical solutions in the embodiments of the present present disclosure, and shall fall within the protection scope of the present present disclosure.

## Claims

1. An automatic cleaning method, comprising:
acquiring SLAM change information of a target cleaning region in a current cleaning process;
determining, based on the SLAM change information of the target cleaning region, whether the target cleaning region is provided with target points that meet a first cleaning condition, wherein the first cleaning condition is used to reflect a feature of points that are not cleaned due to being blocked by an obstacle but are no longer blocked by the obstacle after a position of the obstacle changes; and
performing cleaning based on the target points if the target cleaning region is provided with the target points.

2. The automatic cleaning method according to claim 1, wherein performing the cleaning based on the target points comprises:
determining a cleanable region based on the target points; and
cleaning the cleanable region.

3. The automatic cleaning method according to claim 2, wherein determining the cleanable region based on the target points comprises:
clustering the target points to obtain a plurality of sets of clustered points; and
for each set of clustered points, if the set of clustered points meets a second cleaning condition, determining a region in which the set of clustered points is located to be the cleanable region, wherein the second cleaning condition is used to reflect a feature of the region in which the set of clustered points is located when the region can be effectively cleaned by a cleaning device.

4. The automatic cleaning method according to claim 1, wherein acquiring the SLAM change information of the target cleaning region comprises:
acquiring the SLAM change information of the target cleaning region upon completion of cleaning on a current zone in the target cleaning region; or
acquiring the SLAM change information of the target cleaning region upon completion of all cleaning in the target cleaning region.

5. The automatic cleaning method according to claim 1, wherein acquiring the SLAM change information of the target cleaning region comprises:
acquiring the SLAM change information of the target cleaning region upon completion of cleaning on a current zone in the target cleaning region if a ratio of a cleaned area in the current cleaning process to the target cleaning region is greater than or equal to a specified percentage, and/or if a consumed cleaning duration of the current cleaning process is greater than or equal to a specified duration.

6. The automatic cleaning method according to any one of claims 1 to 5, wherein acquiring the SLAM change information of the target cleaning region comprises:
acquiring current SLAM information of the target cleaning region at a current moment and historical SLAM information of the target cleaning region at a historical moment, wherein
the current moment is a cleaning completion moment of the current zone in the target cleaning region, or a cleaning completion moment of the target cleaning region, and
the historical moment is a cleaning start moment of the current zone, a cleaning start moment of the target cleaning region, or a cleaning start moment of any non-initial zone in the target cleaning region other than the current zone; and
determining the SLAM change information based on the historical SLAM information and the current SLAM information.

7. The automatic cleaning method according to claim 1, wherein determining, based on the SLAM change information of the target cleaning region, whether the target cleaning region is provided with the target points that meet the first cleaning condition comprises:
determining, based on the SLAM change information of the target cleaning region, points with a specified cleaning feature as the target points in the target cleaning region, wherein the specified cleaning feature comprises one or more of the following:
a point type of a point being changed from an obstacle type to a space type;
points adjacent to the point comprising at least one cleaned point and at least one uncleaned point;
the point being spaced apart from the obstacle by at least one other point;
the point being outside a preset no-go region, and the preset no-go region comprising a carpet region, a pile region, and a self-defined safety region; and
the point being outside a cleaned region in the current cleaning process, and a distance from the point to an edge point of the cleaned region being greater than or equal to a first specified distance.

8. The automatic cleaning method according to claim 1, wherein if the set of clustered points meets a second cleaning condition, determining a region in which the set of clustered points is located to be a cleanable region comprises:
determining the region in which the set of clustered points is located to be the cleanable region if a width of the region in which the set of clustered points is located in at least one direction is greater than a maximum machine body width of the cleaning device, an area of the region in which the set of clustered points is located is greater than or equal to a first specified area, and the region in which the set of clustered points is located comprises at least a specified number of points at distances from the obstacle that are greater than or equal to a second specified distance.

9. The automatic cleaning method according to claim 7 or 8, wherein cleaning the cleanable region comprises:
performing a cross-region action on the cleanable region;
cleaning the cleanable region upon successful performing of the cross-region action;
returning to a step of acquiring the SLAM change information of the target cleaning region upon unsuccessful performing of the cross-region action, so as to re-determine whether the target cleaning region is provided with the cleanable region; and
in a case that it is re-determined that the target cleaning region is provided with the cleanable region,
within a specified distance range centered at a current position of the cleaning device, cleaning the cleanable region if an area of an uncleaned region is greater than or equal to a second specified area; and
cancelling the cleaning of the cleanable region if the area of the uncleaned region is less than the second specified area.

10. An automatic cleaning apparatus, comprising:
an SLAM change information acquisition unit, configured to acquire SLAM change information of a target cleaning region in a current cleaning process;
a first cleaning condition verification unit, configured to determine, based on the SLAM change information of the target cleaning region, whether the target cleaning region is provided with target points that meet a first cleaning condition, wherein the first cleaning condition is used to reflect a feature of points that are not cleaned due to being blocked by an obstacle but are no longer blocked by the obstacle after a position of the obstacle changes; and
a cleaning execution unit, configured to perform cleaning based on the target points if the target cleaning region is provided with the target points.

11. A cleaning device, comprising: at least one processor; and a memory communicatively connected to the at least one processor,
wherein the memory stores instructions executable by the at least one processor, and the instructions are configured for performing the method according to any one of claims 1 to 9.

12. A computer-readable storage medium storing computer-executable instructions, wherein the computer-executable instructions are used for performing the method according to any one of claims 1 to 9.
